# EUROPEAN PATENT APPLICATION

(11) **EP 0 697 666 A1**
(43) Date of publication of application: **21.02.1996**
(21) Application number: 95202212.7
(22) Date of filing: 15.08.1995
(51) Int. Cl.: G06F 17/27, G06F 17/28

(54) **System and method for producing documents**

(30) Priority: 15.08.1994 NL 9401314
(71) Applicant: Polydoc N.V., NL-2132 JB Hoofddorp (NL)
(72) Inventor: Peeters, Frans Marie, NL-1841 EC Stompetoren (NL)
(74) Representative: Hooiveld, Arjen Jan Winfried

(57) **Abstract**

What is presented is a document production system and a method wherein documents being processed in computer systems can be provided, in a step-by-step, structured manner, with language data, which can be transferred between a user and a central storage via a communication link. The language data comprises a multitude of language programs available in various languages, which are stored in the central storage, among which spelling programs, lists of synonyms, various types of encyclopedias, dictionaries and databases, translation programs, writing-aid programs, proofreading and error-checking programs, etc. The central storage forms a permanent core of high-quality language data, which is made available to users, who may be spread all over the world, without the individual users having to have this language data at their disposal themselves.

## Description

The present invention relates to a method for producing documents, to a document production system and to documents produced in accordance with said method.

Such systems are generally known. As regards software WordPerfect, MS Word etc., coupled to DTP and document management systems, may be considered thereby. Usually such word-processing programs comprise spell-check or grammar-check programs or for example a thesaurus, which may be stored by users in their computer systems and which may be output from said computer systems.

Furthermore separate software packages, such as a dictionary, a translation package, an encyclopedia and for example an atlas are commercially available for use in an individual PC or in a network.

The drawback of the known document production systems is that they need to have a relatively large storage capacity for the storage of the software referred to above.

Moreover, in view of the almost unbridled and illegal copying of software by potential users, in practice people do not seem to be very particular about the copyright on software and the licensing thereof, resulting in the possible loss of substantial amounts of money by the proprietors in question.

The object of the present invention is to provide a method and a document production system, which make it possible to reduce the amount of storage space locally required by the system, whereby a possibility is created, however, for very high-quality language data - or language-oriented information - to be transferred, distributed and made available to a very large group of paying users.

In order to accomplish that objective the method according to the invention comprises the features defined in claim 1.

The advantage of the method according to the invention is that it is very user-friendly, since the user only sees the same version of the regularly recurring interface when the connection with the central storage is made, and it seems as if he has all the programs and the corresponding language data on his own PC. In technical terms, the user operates in a communication layer which is positioned above the layer that builds up the connection by means of corresponding protocols. What happens in reality, however, is that the user operates in the network of the warehouse by adjustably activating the programs in the selection menu or the selection menus. Said warehouse may be a noncentral warehouse, which means that, dependent on the activated program, contact is sought from the place with which the modem makes contact with that program which is located elsewhere in the world and which is at that moment optimally geared to that task. In that case the warehouse forms part of a WAN (Wide Area Network).

Accordingly the document production system according to the invention comprises the features defined in claims 9 et seq.

As a result of the central storage of the very high-quality language data it is not necessary for the user to keep abreast of all relevant language developments, in particular with regard to the written word, since this is done centrally and developed further, if necessary, on the basis of professional standards by organs and institutes specially equipped for that purpose.

Furthermore the local memory, in which previously the speller programs, grammar-check software, thesauruses, dictionaries, translation packages, encyclopedias and atlases were stored, becomes available again for use by other programs. As a result of this memory capacity is gained locally at the user end.

Moreover, the user no longer needs to worry about the licensing, maintenance and updating of the various language programs, since these aspects are now taken care of centrally.

The most current software in the field of language and the written word in the widest sense will now be constantly available at the central storage end.

The system according to the invention provides a possibility of usage upon request, as a result of which the user does not need to buy his own language software.

In the embodiments of the document production system according to the invention the selected language program remains present in the central storage and is in particular not transferred to the originator, but activated in the central storage of a host PC, so that the user is not given an opportunity to copy the language program he has selected to his own computer system and possibly make further copies for use by others. The risk of a possible infringement of the copyright has thus been reduced.

In another embodiment the central storage of the document production system according to the invention is provided with control means, which control the communication in both directions between the central storage and the user's computer system.

The advantage of this is, that the user never has the initiative to read information, programs or the like from the central storage and download said information, programs or the like into his own computer system. As regards the transfer of data to and from the user's communication system the central storage is the "master" en the user's computer system is the "slave".

In a special embodiment of the document production system according to the invention each computer system is arranged to create a certain file, in which file the request signal is stored, without the user being aware of this, and the control means in the central storage are able to access only that particular file in order to retrieve the request signal from there and, under certain circumstances, to transfer the reply signal only to that particular file.

The advantage of this is that this leads to more univocality and uniformity, at least from the central storage end. The user himself is able to keep working on the document, if desired, whilst the control means retrieve the data from that particular file after a (mostly short) period of time and store the reply in said file again, which reply is immediately available in the user's program again, if desired.

A saving of the time required for the retrieval and processing of data may be realized in a further embodiment of the document production system according to the invention, wherein checking means in said central storage verify upon receipt of a request signal, by checking the source identification data contained in said request signal, from a stored table that has been kept up to date, whether a request signal was received from the same computer system within a previous term, in which case no comparison is made with the contents of the list comprising all authorized users.

In another embodiment of the document production system according to the invention, wherein data requested at any moment is not available in the central storage, said data may be retrieved, via a network connection, from an external database or subsystem (WAN), where the data requested is indeed available.

Language data which are requested only sporadically may be considered in this context.

It is advantageous to have a multitude of language programs available in the central storage, for example:
- spell-check, grammar-check and style-check programs;
- lists of synonyms and concordance lists;
- thesauruses;
- general, technical and multimedia encyclopedias;
- general and technical dictionaries, lexicons;
- various kinds of terminology databases;
- translation programs;
- writing-aid programs;
- proofreading and error-checking programs;
- programs comprising models of texts, text parts, words, expressions, etc. to be used in various kinds of correspondence.

For security reasons, lest no trace of the user requests or documents remains behind in the central storage, said central storage is provided with a multitude of host PC's, which are each restarted (rebooted) after the contact with a computer system has been broken.

By providing the document production system according to the invention with means installed in the central storage which record the usage time of every identified user, it becomes possible for the costs corresponding with said usage to be debited, usually automatically, to that user's account to be charged to the user in question, as a result of which a simple and efficient document production system is obtained.

The invention and its related further advantages will be explained in more detail hereafter with reference to the accompanying drawing, in which:
Figure 1 shows a possible embodiment of a document production system according to the invention;
Figure 2 shows a possible structure of a request signal to be transferred in the system of Figure 1; and
Figure 3 shows a possible structure of a flow diagram, with reference to which the method according to the invention will be explained in more detail.

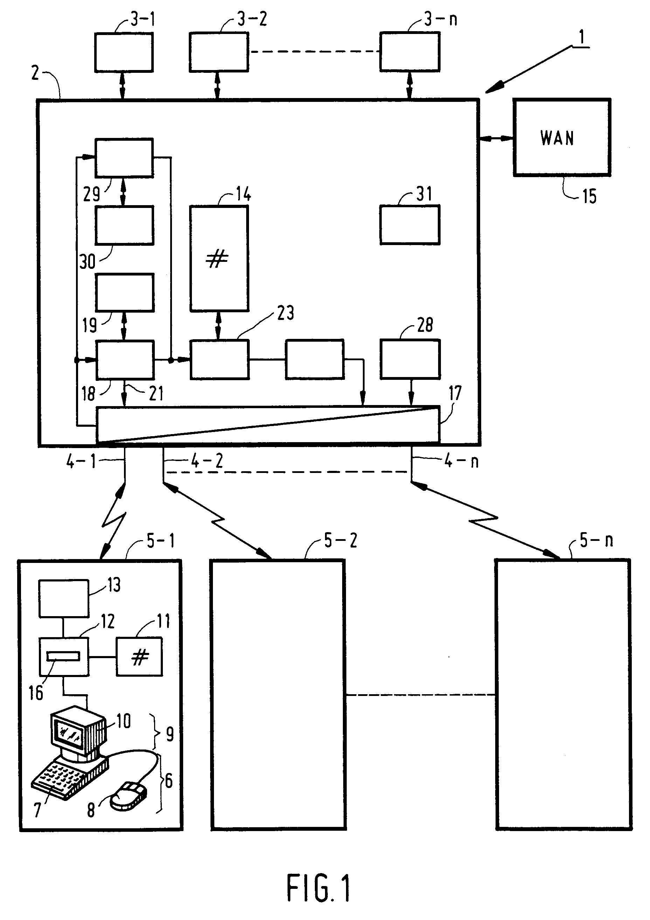

Figure 1 shows a document production system 1, which in the illustrated embodiment comprises a central storage or a central means 2, which is connected to several host PC's 3-1, 3-n, two of which are shown. The central storage 2 is connected, via a (usually long-distance) communication link 4, to individual computer systems 5-1, 5-2, .... 5-n, three of which are shown. Each of said computer systems 5 is provided with data input means 6, which for example comprise a keyboard 7 and a mouse 8. Each computer system 5 is furthermore provided with data output means 9 in the shape of for example a display screen 10. The computer systems 5 are furthermore provided with local memory means 11, which are connected to a processor 12, as are the aforesaid means 6, 9. The processor 12 is connected to the communication link 4-1 via a modem 13.

The communication link 4 may comprise various types of communication channels, such as wireless or non-wireless connections, for example. Examples of wireless connections are for example satellite connections, and examples of non-wireless connections are telephone lines, coax cables, glass fibre cables, electronic highways, cable connections etc.

The central storage 2 comprises a memory 14, in which language data in the form of for example language databases of language data programs is stored. From a linguistic point of view the language data stored is of a very high quality and satisfies very high, if not maximum standards. Insofar as language data is not available in the memory 14, it may be retrieved, if necessary, in an extensive network 15, for example a WAN, which is coupled to the central storage 2. Part of this network 15 are for example a number of very specific application-oriented and specialized suppliers of language data. This language data may be used in the individual supplementation, alteration or conversion of documents being processed in one or more of the computer systems 5. Examples of language data include language programs configured in one or more languages, namely:
- spell-check, grammar-check and style-check programs;
- lists of synonyms and concordance lists;
- thesauruses;
- general, technical and multimedia encyclopedias;
- general and technical dictionaries, lexicons;
- various kinds of terminology databases;
- translation programs;
- writing-aid programs;
- proofreading and error-checking programs, for example for capital letters, punctuation, etc.;
- programs comprising models of texts, text parts, words, expressions, etc. to be used in various kinds of correspondence.

More in particular, several libraries are available for various types of documents from various fields. These fields include for example the chemical industry, information technology enterprises, industrial enterprises, service industries, etc. etc.

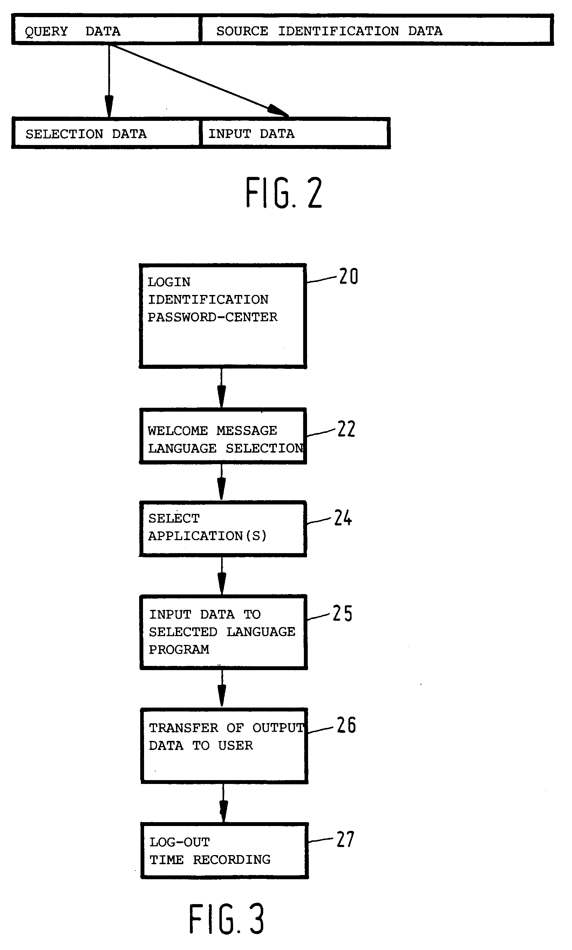

Each computer system 5 possesses request formatting means 16, which can be activated by the user of the computer system to write a request signal, in which request signal a request is made, by means of query data, for information with regard to the document being processed. Figure 2 shows a possible manner of executing the request signal. The request signal on the one hand contains the query data and on the other the source identification data, which includes data as to the identity of the originator, and which in particular includes the data that must be available to the central storage 2 in order to be able to trace the originator and to retrieve and make the connection via the communication link 4-1 with the originator 5-1 via the modem 13. To that end the central storage 2 is provided with transmission-reception means 17. The request signal received by said means 17 is passed to the identification means 18 incorporated therein, which upon receipt of the request signal compare the source-identification data received with identification data included in a list 19 of authorized users. The identification data furthermore includes the password input by the user 5-1, whereby the identification means 18 furthermore verify whether the password corresponds with the password associated with the authorized user.

The request formatting means 16 constitute the interface to the user, which interface is displayed on the screen 10 in the form of a selection menu 20 comprising submenus or pop-up menus. From said menus applications are selected and the types of required input data, which usually vary with each individual application, are input, after which the requested language data can be directly passed to the document(s). In short, the only thing the user sees after inputting the required selection and security codes is the interface with its aforesaid menus, whereby the user communicates with the central storage 2 in such an (ISO) layer, or in other words, at such a level that it seems as if he has the programs and language data at his disposal on his own computer system. This makes the interface quite user-friendly.

Figure 3 shows in block 20 the log-in procedure and the identification and password check. If any inaccuracies are detected during said check, the identification means 18 will deliver a signal, via a link 21, to the means 17, as a result of which the log-in procedure must be restarted. If the password and the identification have been found correct, a welcome message will be displayed on screen 10 in block 20, in which the user is requested to select the language and in which information is supplied and received with regard to the available language programs. If for example the selection of a language is of importance in the possible selection of help functions (not shown), which are made available to the authorized user at any moment in order to supply him with the necessary information, for example with regard to the manner of operation and the selection method and the possibilities which are offered by the various language programs that are stored. Guided by various "window-like" displays, which may be displayed on screen 10, the selection means 23 then use the selection data forming part of the query data to select the desired language programs in memory 14. The input data likewise forming part of the query data are used to provide the selected language program with the necessary input data after the required application has been selected in block 24 of Figure 3. This is schematically indicated in block 25. The central storage 2 contains program output means 26, which control the output of the selected and activated language program to the transmission-reception means 17, which take care of the transfer of a reply signal containing the output data to the originator 5. This is schematically indicated in block 26 of Figure 3.

The selection of language programs does not have to be limited to the selection of one language program, of course, but it will also be possible to activate a series of language programs in order to process, for example translate, a series of input data and then transfer the results in the form of a series of output data to the originator/interface. The advantage of including a multitude of input data in the form of a series of input data is that the access time to the central storage 2 remains minimal.

The interface moreover makes it possible to devise a step-by-step plan tailored to that which is required with regard to the document or report being processed. Said step-by-step plan, which consists of programs usually selected when composing the document, will then support the composition and compilation of the document or type of document in question. In this way it will not be necessary for the user to call successive individual programs when composing a document, because with the step-by-step plan it is fixed from the outset which steps must be gone through in a systematic manner.

In no case are the activated program or the activated programs transferred to the originator. In principle an admitted user may be assigned one of the host PC's 3, in order to have the above-explained procedure completed in and by the host PC. In this manner several users 5 may be served by means of the several host PC's.

The result of the procedure after logging out in block 27 is that the host PC 3 that was previously communicating with a user is restarted (rebooted), so that every trace of any information that was transferred between said user and the central storage 2 is erased. This offers an optimum protection and security for the user, who does not wish others to have knowledge of he contents of the documents processed on his computer system.

In order to prevent every possible attempt by a user to sabotage or even only influence the course of affairs in the central storage 2, the central storage 2 contains control means 28, which control the communication in both direction between the central storage 2 and each of the computer systems 5 and/or the interface 5 according to a fixed and optimized protocol. In particular the central storage is always the "master" in the communication and each of the computer systems 5 is the "slave".

For security reasons the communication between the central storage 2 and a communication 5 may be structured and limited even more, so that the control means 28 will be able to access only a particular file created in a specific manner in the processor 12, in order to retrieve from there the request signal placed in said file by the request formatting means 16, and in order that a reply signal containing the output data can only be transferred to that particular file. The transfer of the required data from said file to the word processing program on the computer system 5 can be arranged locally then, so that the user can have the data he requires at his disposal, possibly in the document being processed.

In order to reduce the access time to the central storage 2, said central storage may be provided with checking means 29, if desired. After receipt of a request signal said checking means 29 verify whether the source identification data contained therein corresponds with a series of identification data contained in a stored table 30, which is kept up to date, said identification data comprising data on authorized users who previously accessed the central storage 2 within a predetermined period of time. This procedure takes less time than going through the usually more extensive list 19 of all authorized users, so that some time is gained in this way when a user accesses the central storage 2 for the second or other time. The user is not aware of these activities at all, however, because he only communicates with the interface.

The central storage 2 is provided with means 31 which record the usage time of each individual user that has been admitted, so that the costs corresponding with the usage time can be debited to an account, automatically, if desired, and usually once per predetermined period, or be charged to the user.

Of course the transfer of information between a user and the storage 2 will take place in such a manner that it will be transparent to the user and will not interfere with his further activities on his computer system, therefore.

The interface may already be placed in the background (in another window) when the computer system 5 is started, and can be called from the actual program, such as a word-processing program or a Windows program. Usually a sign, icon or pictogram is displayed in the actual program, by means of which the interface can be called, for example by clicking on said sign, icon or pictogram with the mouse 8. The way in which the interface presents itself to the user by means of the selection menus is adjustable. When the connection is made the selection possibilities within the selection menus, the pop-up menus, the switches, buttons and the like are adapted by the central means 2, usually automatically, to a possibly revised structure, composition or contents of the programs and language data then available. The time during which the link is active is recorded at the end of the central means 2 as a measure for charging the users for their consultation of the language data. The time is displayed on the screen while the user is on-line.

## Claims

1. A method for producing documents, such as for example correspondence or reports, in a document production system comprising local computer systems, which are each provided with data input and output means, such as a keyboard, a display screen and the like and in which documents are started, fashioned, supplemented and processed, each computer system being provided with a modem which is connected to a, usually longdistance, communication link, whereby several types of communication channels, such as telephone lines, satellite connections, glass fibre channels, cable connections, etc. may form part of the communication link for making a connection with a central storage "warehouse", in which high-quality language data is stored, or to which language data may at least be made available, and which may be used in the individual supplementation, alteration or conversion of a document being processed in said computer system, in a manner wherein the accessing of the language data from said computer system via said modem takes place by means of an interface installed in said computer system, which interface, after being activated, will display on a screen a selection menu comprising programs that are available to the user, by means of which programs said language data are made accessible in such a manner, that after inputting the necessary selection and security codes the user seems to communicate with the software and language data which are seemingly available on the local computer system.

2. A method according to claim 1, wherein said interface is placed in the background of the local computer system and can be called from the background from the actual program, such as for example a word-processing program, a "Windows" or a "Works" program in order to display said selection menu.

3. A method according to claim 2, wherein an icon is displayed in the actual program after said placing in the background, which icon is to be used in activating said interface.

4. A method according to any one of the claims 1 - 3, wherein, after the desired software has been selected in said selection menu, the result of said selection can be placed in the document being processed.

5. A method according to any one of the claims 1 - 4, wherein the programs displayed in said selection menu can be tailored to the requirements of the user in question.

6. A method according to any one of the claims 1 - 5, wherein the language data present in said central storage can be changed as desired.

7. A method according to claim 6, wherein, after a communication link has been made between said local computer system and said central storage, the reference to the programs displayed in said selection menu is adapted to the possibly changed situation, titles or structure of the language data.

8. A method according to any one of the claims 1 - 7, wherein a time indication is active during the time that a connection exists between said local computer system and said central storage, which time indication is capable of displaying the time elapsed on said display screen.

9. A document production system equipped with components for implementing the method according to any one of the preceding claims 1 - 8.

10. A document production system according to claim 9, wherein said computer system comprises request formatting means, which can be activated by a user in order to format a request signal, in which a request is made, by means of query data, for information with regard to the document being processed, which request signal, after source identification data have been added thereto, is transmitted by said modem via said communication link to reception means in said central storage, where, upon first receipt of said request signal, identification means in the central storage compare said source identification data with identification data in a stored list of authorized users, and it is established whether said request signal originates from an authorized user and, if that is the case, selection means in said central storage select, on the basis of selection data contained in the query data, that language program from the centrally stored data which is represented by the selection data, after which input data from said query data is supplied to and processed by the selected language program, which has been activated in the meantime, which results in output data which is placed in a reply signal, which is returned, via said communication link, to the originator of said request signal by transmission means in said central storage, after which said output data is made available to the user as a reply to said query, in order to be used with regard to the document being processed.

11. A document production system according to any one of the claims 9 - 10, wherein the selected language program remains present in said central storage and is not transferred to the originator but activated in a host PC in said central storage.

12. A document production system according to any one of the claims 9 - 11, wherein said central storage is provided with control means, which control the communication in both directions between said central storage and each of said computer systems.

13. A document production system according to claim 12, wherein each computer system is arranged to create a certain file, in which the request signal is stored, and wherein said control means in said central storage are able to access only that particular file in order to retrieve the request signal from there.

14. A document production system according to any one of the claims 9 - 14, wherein said reply signal can only be transferred to said particular file by said control means.

15. A document production system according to any one of the claims 9 - 14, wherein checking means in said central storage verify upon receipt of a request signal, by checking the source identification data contained in said request signal, from a stored table that has been kept up to date, whether a request signal was received from the same computer system within a previous term, in which case no comparison is made with the contents of the list comprising all authorized users.

16. A document production system according to any one of the claims 9 - 15, wherein the language data which is not available in said central storage at any moment can be retrieved from at least one external database or subsystem, which can be linked to said central storage via a network connection.

17. A document production system according to any one of the claims 9 - 16, wherein the language data from said central storage is stored in one or more languages in the form of one or more of the following language programs:
- spell-check, grammar-check and style-check programs;
- lists of synonyms and concordance lists;
- thesauruses;
- general, technical and multimedia encyclopedias;
- general and technical dictionaries, lexicons;
- various kinds of terminology databases;
- translation programs;
- writing-aid programs;
- proofreading and error-checking programs;
- programs comprising models of texts, text parts, words, expressions, etc., to be used in various kinds of correspondence,
which language programs can be gone through in a structured manner according to a step-by-step plan, if desired.

18. A document production system according to any one of the claims 1 - 8, wherein said central storage is provided with a multitude of host PC's, which are restarted (rebooted) every time that the contact with a computer system has been broken.

19. A document production system according to any one of the claims 1 - 9, wherein said central storage is provided with means which record the usage time of every identified user, after which the costs corresponding therewith are automatically debited to the user's account, usually once per period, or charged to the user.

20. A document produced by using the method according to any one of the claims 1 - 8.
